# EUROPEAN PATENT APPLICATION

(11) **EP 2 328 336 A1**
(43) Date of publication of application: **01.06.2011**
(21) Application number: 10187432.9
(22) Date of filing: 13.10.2010
(51) Int. Cl.: H04N 1/00

(54) **Image reading apparatus, method, and storage medium storing program**

(30) Priority: 25.11.2009 JP 2009267827
(71) Applicant: Canon Kabushiki Kaisha, Tokyo 146-8501 (JP)
(72) Inventor: Nishiyama, Masashi, Tokyo Tokyo 146-8501 (JP)
(74) Representative: TBK

(57) **Abstract**

An image reading apparatus requests an external apparatus (102) to issue an image read instruction, receives the image read instruction which is sent from the external apparatus (102) in response to the request, and generates image data by reading an image in accordance with the image read instruction. The image reading apparatus accepts an instruction as to whether or not to transfer the image data to the external apparatus (102) (S704) The image reading apparatus transfers the image data to the external apparatus (102) when it accepts the transfer instruction (S706).

## Description

### BACKGROUND OF THE INVENTION

### Field of the Invention

The present invention relates to an image reading apparatus and method for generating image data by reading an image, and a storage medium storing a program.

### Description of the Related Art

Conventionally, not only computers such as PCs but also image reading apparatuses such as locally connected scanners support a network. Such image reading apparatus generates image data by scanning a document based on a read instruction from a PC, and transmits that image data to the PC. Such scan mode of the image reading apparatus based on an instruction from the PC is generally called "pull scan".

Japanese Patent Laid-Open No. 2002-77504 describes an image reading apparatus which transmits image data generated by reading a document to an arbitrary apparatus (for example, a file server) connected to a network via the network. In this case, the image reading apparatus can also transmit the image data to a plurality of apparatuses connected to the network (multi-address transmission). Such scan mode based on an instruction from the image reading apparatus is called "push scan" in contrast to "pull scan". In this case, a general image reading apparatus of "push scan" displays image data generated based on a read instruction on an operation panel to allow the user to confirm (a preview image of) that image data before it transmits the image data to the PC side (Japanese Patent Laid-Open No. 2007-166458).

In recent years, the following scan operation is often performed in place of the aforementioned "pull scan" and "push scan". An image reading apparatus transmits an event to a PC, and the PC issues a read instruction to the image reading apparatus, thus executing e-mail or FAX sending processing using the read image data on the PC side. In such operation, unlike the aforementioned "push scan", the PC side performs issuance of a scan (reading) instruction, image processing including OCR (Optical Character Reader) and skew correction, and e-mail or FAX sending processing.

In the aforementioned operation, event processing is set in advance on the PC side. In this event processing, the contents of a read instruction to be transmitted to the image reading apparatus when the PC receives a predetermined event message, and processing to be applied to image data acquired as a result of reading processing are set. The processing using image data which is processed on the PC side includes, for example, that for applying OCR processing to the acquired image data, and sending the OCR result as an e-mail message. After such settings are made, the user sets a document on the image reading apparatus side, and transmits an event message to the PC side. The contents of operations to be made by the user are the same as those of the aforementioned "push scan". However, in practice, the PC issues a read instruction to the image reading apparatus, and acquires and processes image data.

Since the scan settings in the above operation are made on the PC side, the user may often want to confirm the scan result as a preview image. However, a timing set in advance on the PC side is normally different from an event transmission timing to the PC side after the user actually sets paper sheets and the like. Therefore, the user sets paper sheets on the image reading apparatus, goes back to the PC, and confirms the scan result after image data is acquired, resulting in inconvenience. When the scan result is unsatisfactory, image data is wastefully transferred.

### SUMMARY OF THE INVENTION

An aspect of the present invention is to eliminate the above-mentioned problems with the conventional technology. The present invention provides an image reading apparatus and method, which transfer image data after an instruction is accepted, so as to prevent image data read by the image reading apparatus from being idly transferred, and a storage medium storing a program.

The present invention in its first aspect provides an image reading apparatus as specified in claims 1 to 4.

The present invention in its second aspect provides an image reading method as specified in claim 5.

The present invention in its third aspect provides a storage medium as specified in claim 6.

According to the present invention, since image data read by the image reading apparatus can be transferred after an instruction is accepted, image data can be prevented from being idly transferred, thus improving convenience.

Further features of the present invention will become apparent from the following description of exemplary embodiments with reference to the attached drawings.

### BRIEF DESCRIPTION OF THE DRAWINGS

Fig. 1 is a block diagram showing the arrangement of a system using an image reading apparatus;

Fig. 2 is a block diagram showing the internal arrangement of the image reading apparatus;

Fig. 3 is a block diagram showing the arrangement of an information processing apparatus;

Fig. 4 is a chart for explaining the sequence of processes between the image reading apparatus and information processing apparatus;

Figs. 5A and 5B are views showing an example of a screen required for event settings;

Fig. 6 is a flowchart showing the overall sequence of processing of the image reading apparatus;

Fig. 7 is a flowchart showing details of the sequence of image reading processing of the image reading apparatus; and

Fig. 8 is a flowchart showing the sequence of retry processing executed by the image reading apparatus.

### DESCRIPTION OF THE EMBODIMENTS

Preferred embodiments of the present invention will now be described hereinafter in detail, with reference to the accompanying drawings. It is to be understood that the following embodiments are not intended to limit the claims of the present invention, and that not all of the combinations of the aspects that are described according to the following embodiments are necessarily required with respect to the means to solve the problems according to the present invention. The same reference numerals denote the same components throughout the drawings, and a repetitive description thereof will be avoided.

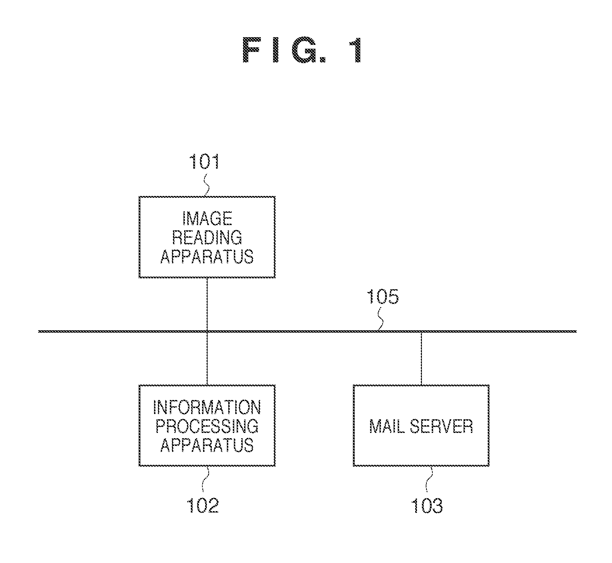

The arrangement of a system assumed in this embodiment will be described below with reference to Fig. 1. A network 105 shown in Fig. 1 is comprised of, for example, a general LAN, and a plurality of apparatuses having network interfaces are connected to the network 105. An image reading apparatus 101 has a scanner function of reading a set document, and transmits read image data to an external apparatus connected to the network 105. The image reading apparatus 101 may be an apparatus having only the scanner function. Alternatively, the image reading apparatus 101 may be an MFP (Multifunction Peripheral) having a plurality of functions such as printer, scanner, and FAX functions.

An information processing apparatus 102 is a general information processing apparatus such as a PC. In this embodiment, the information processing apparatus 102 acquires image data using the scanner function of the image reading apparatus 101, and executes application processing for the acquired image data. As the application processing, for example, OCR processing and skew correction processing are applied to image data, and e-mail or FAX sending processing is executed. A mail server 103 is, for example, an e-mail server, and controls sending and reception of e-mail messages using SMTP (Simple Mail Transfer Protocol) and POP3 (Post Office Protocol). In the mail server 103, an e-mail account of the information processing apparatus 102 is set to allow respective apparatuses to send e-mail messages via the mail server 103.

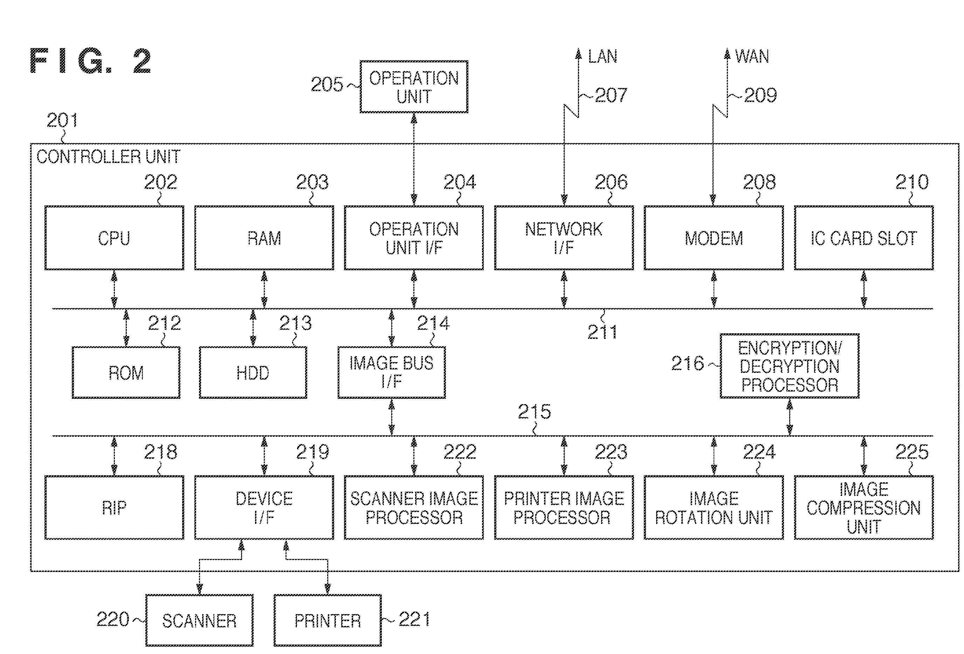

Fig. 2 is a block diagram showing the arrangement of the image reading apparatus 101. A controller unit 201 is connected to a scanner 220 as an image input device and a printer 221 as an image output device. The image reading apparatus 101 can input and output image information and device information by connecting the controller unit 201 to a LAN 207 and WAN 209. A CPU 202 is a controller which controls the overall system. A RAM 203 is a system work memory required for the operation of the CPU 202, and also servers as an image memory used to temporarily store image data. A ROM 212 is a boot ROM, and stores a boot program of the system. An HDD 213 is a hard disk drive, and stores system software and image data. An operation unit I/F 204 is an interface with an operation unit 205 having a touch panel, and outputs image data to be displayed on the operation unit 205 to the operation unit 205. The operation unit I/F 204 transfers information input by the user at the operation unit 205 to the CPU 202. A network I/F 206 is connected to the LAN 207, and inputs and outputs communication data. A modem 208 is connected to the WAN 209, and inputs and outputs communication data.

The aforementioned blocks are connected on a system bus 211. An image bus I/F 214 is a bus bridge, which connects the system bus 211 and an image bus 215 which transfers image data at high speed, and converts data structures. The image bus 215 is comprised of, for example, a PCI bus or IEEE1394. On the image bus 215, the following blocks are connected.

A raster image processor (RIP) 218 rasterizes PDL code data into bitmap image data. A device I/F 219 connects the scanner 220 and printer 221 as the image input and output devices to the controller unit 201 to convert syncronous and asynchronous systems of image data. A scanner image processor 222 applies processing such as correction, modification, and editing to input image data. A printer image processor 223 applies processing such as printer correction and resolution conversion to print output image data. An image rotation unit 224 applies processing such as rotation to image data. An image compression unit 225 applies compression/decompression processing such as JPEG to multi-valued image data and that such as JBIG, MMR, or MH to binary image data. When an IC card medium is inserted into an IC card slot 210 to input an appropriate PIN (Personal Identifier Number) code, keys used in encryption/decryption can be input and output. An encryption/decryption processor 216 is a hardware accelerator board which executes encryption/decryption processing of data using keys in the medium inserted in the IC card slot 210.

The arrangement shown in Fig. 2 is an example of that of the image reading apparatus 101 as an MFP. Therefore, when the image reading apparatus 101 is a single-function apparatus having only the scanner function, some components described above may not be included.

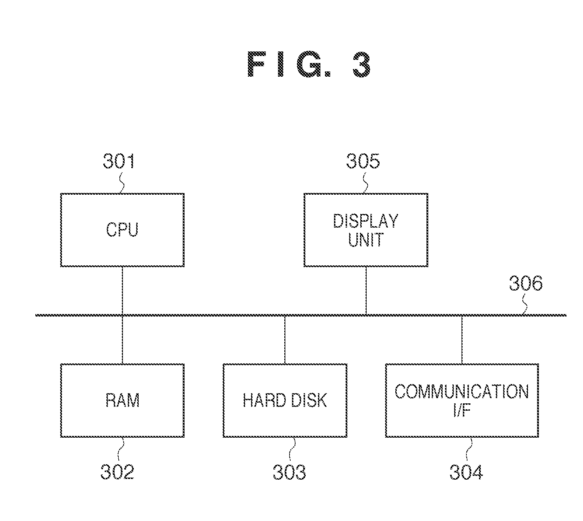

Fig. 3 is a block diagram showing an example of the arrangement of the information processing apparatus 102. A CPU 301 controls respective blocks connected to a bus 306. A RAM 302 serves as a work area of the CPU 301. A hard disk 303 stores programs according to this embodiment, and settings required to implement functions of this embodiment. As the hard disk 303, a nonvolatile memory such as an NVRAM may be used. A communication I/F 304 is an interface used to perform communications with other apparatuses via a network. A display unit 305 displays a user interface required for event settings (to be described later). The aforementioned blocks are connected to the bus 306. The information processing apparatus 102 may also include a UI display unit and user command input device (neither are shown).

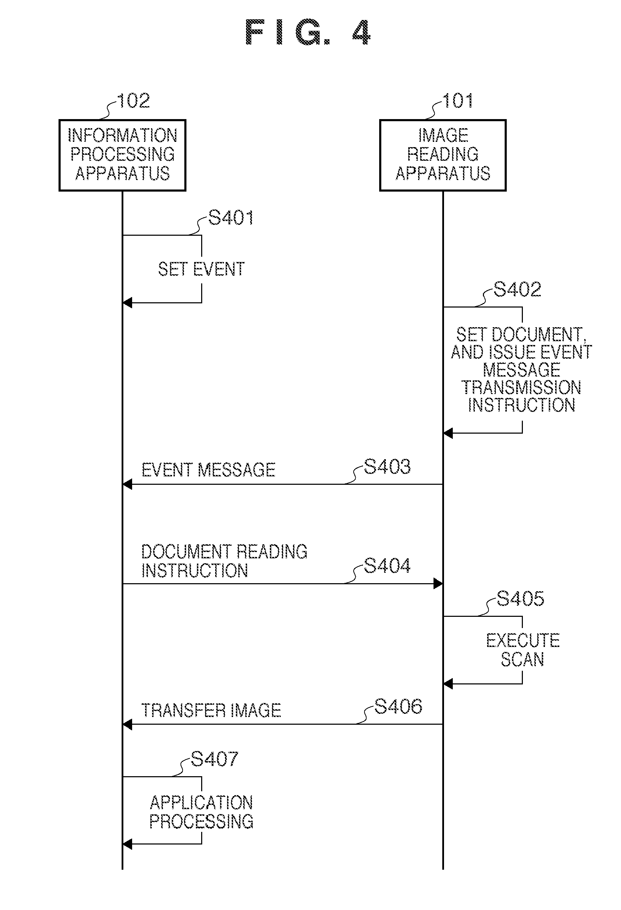

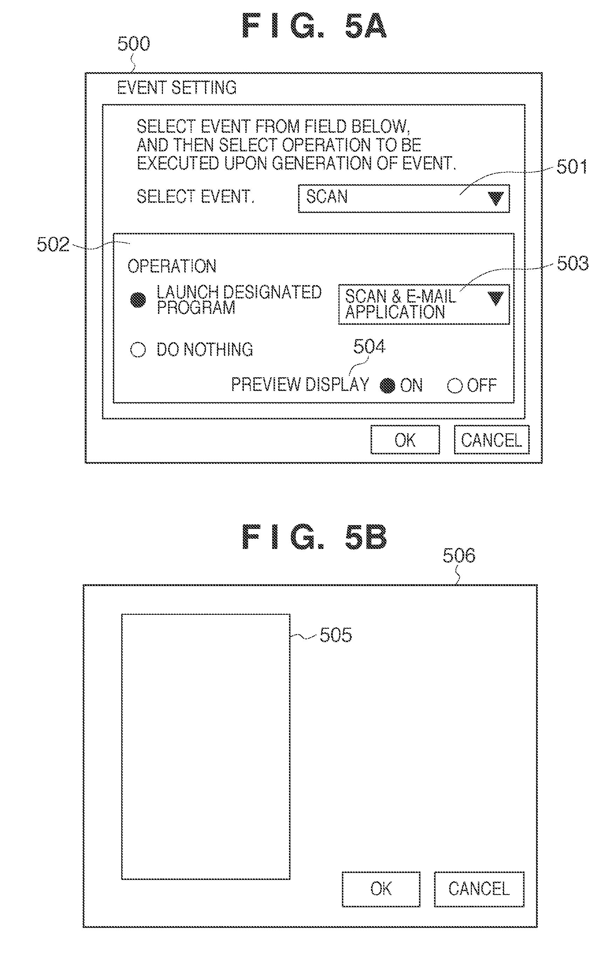

Fig. 4 is a chart for explaining the operations of image reading processing between the image reading apparatus 101 and information processing apparatus 102 according to this embodiment. Initially, the user sets an event using the information processing apparatus 102 (S401). An example of an event setting screen displayed on the UI display unit of the information processing apparatus 102 will be described later with reference to Figs. 5A and 5B. The user sets a document on the image reading apparatus 101, designates the information processing apparatus 102 as a transmission destination of an event message using the operation unit 205, and inputs an event message transmission instruction (S402). The information processing apparatus 102 receives the event message transmitted from the image reading apparatus 101 via the network 105 (S403). After reception of the event message, the information processing apparatus 102 transmits an image read instruction of the document to the image reading apparatus 101 according to the contents set in step S401 (S404). In this embodiment, the document read instruction is transmitted using a network communication via the network 105. Alternatively, a tool such as a network TWAIN may be launched to communicate with the image reading apparatus 101, or a communication by means of a Web service may be made. The image reading apparatus 101 generates image data by scanning the document by the scanner 220 (S405).

The generated image data is stored in the RAM 203 or HDD 213, and is then transferred to the information processing apparatus 102 via the network 105 (S406). As the transfer method at this time, image data may be transferred in a single network session in step S404 while maintaining that session. Alternatively, after the session in step S404 is closed, the image reading apparatus 101 may establish a network connection again to the information processing apparatus 102, thereby transferring image data. Alternatively, the information processing apparatus 102 may communicate with the image reading apparatus 101 at predetermined intervals to refer to a specific area of the HDD 213 in the image reading apparatus 101, and may acquire image data when the image data is generated in that area.

As shown in Fig. 4, the operations in which an event is transmitted from the image reading apparatus to the PC, the PC issues a read instruction to the image reading apparatus, and the PC executes the application processing using the read image data (S407) will also be referred to as "pseudo push scan" hereinafter.

Fig. 5A is a view showing an example of a UI at the time of the event settings, which UI is displayed on the display unit 305 of the information processing apparatus 102. A screen 500 shows a UI screen at the time of the event settings. The user can select an event to be set using a field 501. In this embodiment, since the pseudo push scan shown in Fig. 4 is to be executed, the user selects "scan event" as an event. When the information processing apparatus 102 receives a scan event message, it executes processing selected on an area 502. This embodiment assumes an event in which after reception of the scan event message, the information processing apparatus 102 issues a document read instruction to the image reading apparatus 101 to acquire scanned image data, and the image data is sent using an e-mail message. Hence, in Fig. 5A, the user selects "launch designated program" on the area 502, and selects "scan & e-mail application" using a field 503.

Upon launching "scan & e-mail application", the information processing apparatus 102 issues a document read instruction to the image reading apparatus 101, and sends image data acquired as a result of the document reading operation to a set destination using an e-mail message. The document read instruction to be issued to the image reading apparatus includes, for example, a reading size, magnification, resolution, color selection, density, document type, and text/photo information. Also, the document read instruction includes the setting contents (whether or not to display a preview image, etc.) set as the event using Fig. 5A in step S401, as will be described later. These pieces of information are set on, for example, the scan & e-mail application side selected using the field 503. Radio buttons 504 are used to set whether or not to display a preview screen (to be described later). When the user selects "ON", a preview screen is displayed on the display unit of the operation unit 205 of the image reading apparatus 101; when he or she selects "OFF", no preview screen is displayed.

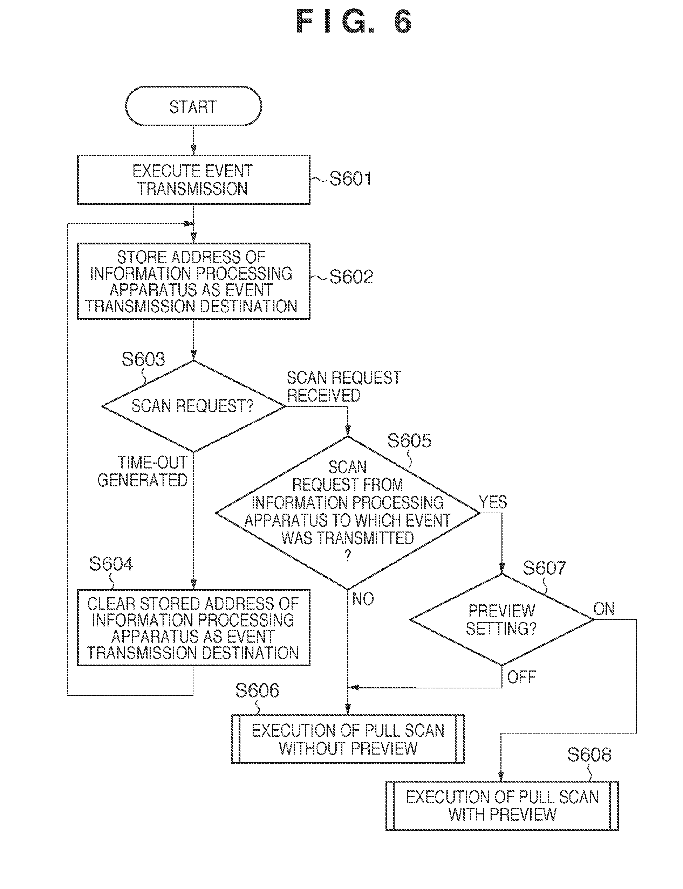

Fig. 6 is a flowchart showing the processing sequence of the image reading apparatus 101 when the pseudo push scan shown in Fig. 4 is executed. The processing shown in Fig. 6 is executed by, for example, the CPU 202 shown in Fig. 2. The image reading apparatus 101 executes event transmission (S601). This step is the same as step S403 shown in Fig. 4. The image reading apparatus 101 then stores an address of the information processing apparatus 102 as an event transmission destination (S602). Next, the image reading apparatus 101 is set in a scan request waiting state (S603). In this case, if a scan request is not received within a predetermined time period (that is, a time-out), the process advances to step S604. In step S604, the image reading apparatus 101 clears the address of the information processing apparatus 102 as the transmission destination, which is stored in step S602, and the process returns to step S603.

On the other hand, if it is determined in step S603 that a scan request is received within the predetermined time period, the process advances to step S605. It is checked in step S605 if the address of the information processing apparatus as the event transmission destination, which is stored in step S602, is equal to that of an information processing apparatus as a scan request source. In this case, if it is determined that the two addresses are equal to each other, since the received scan request is determined as that for the pseudo push scan, the process advances to step S607. On the other hand, if it is determined that the two addresses are different, since the received scan request is determined as that for a general pull scan, a pull scan without displaying any preview screen is executed (S606). Note that when the address of the information processing apparatus is cleared in step S604, since NO is always determined in step S605, the process advances to step S606.

It is checked in step S607 whether a preview display mode at the time of the pseudo push scan is set to be ON or OFF. This checking process is implemented based on the content set using the radio button 504 shown in Fig. 5A. Even at the time of the pseudo push scan, the user who does not require any preview display selects the OFF button 504. If the preview display mode is set to be OFF, a normal pull scan without any preview operation is executed (S606). On the other hand, if the preview display mode is set to be ON, a pull scan with a preview operation is executed (S608).

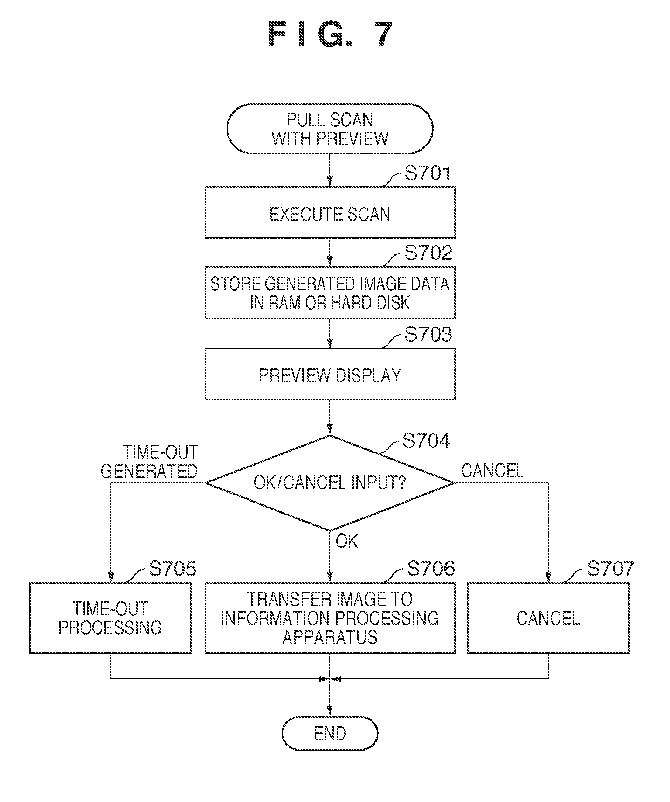

Fig. 7 is a flowchart showing details of the processing sequence of the image reading apparatus 101 when the pull scan with the preview operation is executed in Fig. 6. The image reading apparatus 101 executes a scan (S701). After the scan is executed, image data is stored in the RAM 203 or HDD 213 (S702). The image reading apparatus 101 displays a preview image of the stored image data (S703), and accepts an execution OK or cancel instruction (S704). Fig. 5B is a view showing an example of a preview screen 506 displayed in step S703. On an area 505, a preview image expressed by the image data is displayed, and the user can confirm the image reading result. By pressing an OK or cancel button shown in Fig. 5B, the user can issue an execution OK or cancel instruction.

If no input is made after an elapse of a predetermined time period (time-out), the process advances to step S705 to execute time-out processing, thus ending this processing. The user may set the contents of the time-out processing in advance in the image reading apparatus 101. When a time-out is generated, image transfer to the information processing apparatus 102 may be either executed or canceled.

If an execution OK instruction is accepted in step S704, the image data is transferred to the information processing apparatus 102 (S706), thus ending this processing. If a cancel instruction is accepted in step S704, the image data is deleted (S707), thus ending this processing. In this embodiment, the image reading apparatus 101 controls not to transfer the image data to the information processing apparatus 102 (PC side) until an execution OK instruction is received in step S704.

For example, assume that the information processing apparatus 102 polls a predetermined area of the HDD of the image reading apparatus 101, and acquires image data when the image data is generated in that area. In this case, the image reading apparatus 101 does not generate any image data in that area until an execution OK instruction is accepted in step S704, thereby implementing the aforementioned control. Alternatively, the image reading apparatus 101 may not start transmission processing for transmitting data to the information processing apparatus 102 until an execution OK instruction is accepted in step S704, thereby implementing the aforementioned control. Alternatively, when the information processing apparatus 102 sends a scan request by RPC (Remote Procedure Call), the image reading apparatus 101 may not start response transmission until an execution OK instruction is accepted in step S704, thereby implementing the aforementioned control.

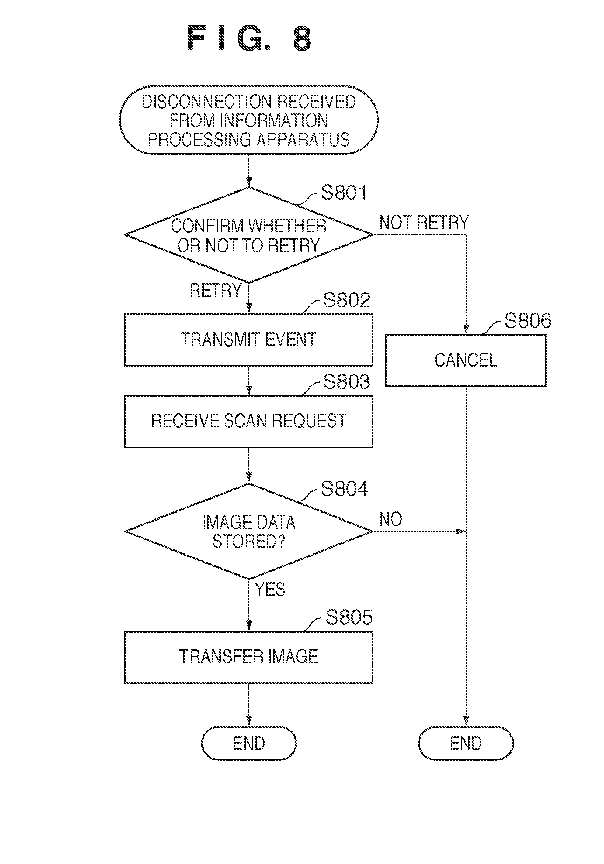

In Fig. 7, a time-out caused by the information processing apparatus 102 side may often be determined before a preview display execution OK/cancel instruction is accepted in step S704. For example, this is the case when a time-out is set on the information processing apparatus 102 side, or when a time-out is caused by a network communication. In this embodiment, if a time-out caused by the information processing apparatus 102 is generated in step S704, retry processing shown in Fig. 8 is executed.

Fig. 8 is a flowchart showing the sequence of retry processing in the image reading apparatus 101. The processing shown in Fig. 8 is executed by, for example, the CPU 202. A case will be examined below wherein the image reading apparatus 101 detects a disconnection due to a time-out on the information processing apparatus 102 side during the preview display in step S703 in Fig. 7. Upon reception of a disconnection due to generation of a time-out on the information processing apparatus 102 side, a message indicating generation of the time-out is displayed on the screen of the image reading apparatus 101. The image reading apparatus 101 displays, on the operation unit 205, a screen that prompts the user to select whether or not to transmit (retry) an event for reacquiring an image to the information processing apparatus 102, and checks whether or not the user wants to retry (S801). If it is determined that the user does not want to retry, the image data is discarded, thus ending this processing (S806). On the other hand, if it is determined that the user wants to retry, an event message is transmitted to the information processing apparatus 102 (S802) That is, the image reading apparatus 101 accepts, on the screen, an instruction as to whether or not to retry (re-request acceptance), and re-requests the information processing apparatus 102 to issue an image read instruction.

The information processing apparatus 102, which received the event message, issues a document read instruction to the image reading apparatus 101 again. If the image reading apparatus 101 receives a scan request from the information processing apparatus 102 again (S803), it checks if the image data at the time of the previous scan is stored in the RAM 203 or HDD 213 (S804). In this case, the image reading apparatus 101 may issue a JobID for each scan, and may set that JobID in an attribute of image data, thereby allowing to check whether or not the image data at the time of the previous scan is stored. Alternatively, the image reading apparatus 101 may be set not to delete image data stored in the RAM 203 or HDD 213 in step S702 shown in Fig. 7 before an elapse of a predetermined time period or before the RAM 203 or HDD 213 reaches a full storage state. If it is determined in step S804 that the image data is stored, that image data is transferred to the information processing apparatus 102 without executing a scan again (S805). On the other hand, if it is determined that no image data is stored, this processing ends without executing a scan again. Alternatively, if it is determined that no image data is stored, a scan may be executed again.

As described above, according to this embodiment, when the pseudo push scan operation shown in Fig. 4 is executed, the preview screen of scanned image data is displayed, and transfer of that image data to the information processing apparatus 102 is started after an instruction from the user is accepted. The preview screen is displayed not at the point in time when the user sets the pseudo push scan (S401) but at the point in time when the user instructs the image reading apparatus 101 to transmit an event message and a scan request is received. Therefore, the user can confirm a preview image from the same site where he or she sets a document on the image reading apparatus 101. That is, since the user need not go back to the information processing apparatus 102 side to confirm a scan result, convenience can be improved for the user. Furthermore, since image data is transferred from the image reading apparatus 101 to the information processing apparatus 102 after a user instruction is accepted, when the user cancels the image in the preview mode (S707), idle data transfer can be avoided.

### <Other Embodiments>

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. An image reading apparatus requests an external apparatus (102) to issue an image read instruction, receives the image read instruction which is sent from the external apparatus (102) in response to the request, and generates image data by reading an image in accordance with the image read instruction. The image reading apparatus accepts an instruction as to whether or not to transfer the image data to the external apparatus (102) (S704). The image reading apparatus transfers the image data to the external apparatus (102) when it accepts the transfer instruction (S706).

## Claims

1. An image reading apparatus comprising:
request means (201) configured to request an external apparatus (102) to issue an image read instruction;
reception means (201) configured to receive the image read instruction which is sent from the external apparatus (102) in response to the request by the request means;
reading means (201, 220) configured to generate image data by reading image in accordance with the image read instruction;
storage means (201) configured to store the generated image data;
acceptance means (201, 205) configured to accept an instruction as to whether or not to transfer the stored image data to the external apparatus (102); and
transfer means (201) configured to transfer the image data to the external apparatus (102) when said acceptance means accepts an instruction to transfer the image data to the external apparatus (102).

2. The apparatus according to claim 1, further comprising display means configured to display a preview image of the generated image data,
wherein said acceptance means accepts an instruction as to whether or not to transfer the image data, the preview image of which is displayed by said display means.

3. The apparatus according to claim 1, further comprising re-request acceptance means configured to accept an instruction as to whether or not to re-request the external apparatus (102) to issue an image read instruction, when a disconnection from the external apparatus (102) is detected after the image data is generated,
wherein when the re-request instruction is accepted, said request means requests the external apparatus (102) to issue an image read instruction again.

4. The apparatus according to claim 1, further comprising delete means configure to delete the image data when said acceptance means accepts an instruction not to transfer the image data to the external apparatus (102).

5. An image reading method executed by an image reading apparatus, comprising:
a request step of requesting an external apparatus (102) to issue an image read instruction;
a reception step of receiving the image read instruction which is sent from the external apparatus (102) in response to the request;
a reading step of generating image data by reading an image in accordance with the image read instruction;
a storage step of storing the generated image data;
an acceptance step of accepting an instruction as to whether or not to transfer the stored image data to the external apparatus (102); and
a transfer step of transferring the image data to the external apparatus (102) when an instruction to transfer the image data to the external apparatus (102) is accepted in the acceptance step.

6. A storage medium storing a program for controlling a computer as an image reading apparatus to function to:
request an external apparatus (102) to issue an image read instruction;
receive the image read instruction which is sent from the external apparatus (102) in response to the request;
generate image data by reading an image in accordance with the image read instruction;
store the generated image data;
accept an instruction as to whether or not to transfer the stored image data to the external apparatus (102); and
transfer the image data to the external apparatus (102) when an instruction to transfer the image data to the external apparatus (102) is accepted.
